(19) Europäisches Patentamt
European Patent Office
Office européen des brevets

(11) Publication number: 0 337 499 A2

(12) # EUROPEAN PATENT APPLICATION

(21) Application number: 89108619.1

(51) Int. Cl.4: B01D 13/00 , B01D 53/22

(22) Date of filing: 26.11.84

(30) Priority: 26.11.83 JP 222536/83
28.11.83 JP 223640/83
26.12.83 JP 250500/83
28.09.84 JP 203408/84

(43) Date of publication of application:
18.10.89 Bulletin 89/42

(60) Publication number of the earlier application in accordance with Art.76 EPC: 0 144 054

(84) Designated Contracting States:
DE FR GB

(71) Applicant: Matsushita Electric Industrial Co., Ltd.
1006 Oaza Kadoma
Kadoma-shi Osaka(JP)

(72) Inventor: Kawahito, Midori
5-3-20, Tokumaru Itabashi-ku
Tokyo(JP)
Inventor: Saito, Yukihiro
3-1-3, Fujisaki Kawasaki-ku
Kawasaki(JP)
Inventor: Asakawa, Shiro
4-3011-18, Iriya
Zama-shi Kanagawa-ken(JP)
Inventor: Kashima, Takafumi
30-23, Miyuki Higashi-cho
Neyagawa-shi Osaka(JP)

(74) Representative: Struif, Bernward, Dipl.-Chem. Dr. et al
Patentanwaltsbüro Tiedtke, Bühling, Kinne Grupe, Pellmann, Grams, Struif,Winter, Roth
Bavariaring 4
D-8000 München 2(DE)

(54) **Method for regenerating used gas-permeable films.**

(57) A gas-permeable composite film comprising a gas-selective film consisting of at least one layer for separating and concentrating an intended gas from mixed gases, and a covering layer formed on the selective film. The covering layer has a critical surface tension not larger than 30 dyne/cm and a contact angle of water of not smaller than 90°. A method of regenerating the film used over a long term is also described in which the used film is contacted with an organic liquid medium inert to the material for the film.

Fig. 1

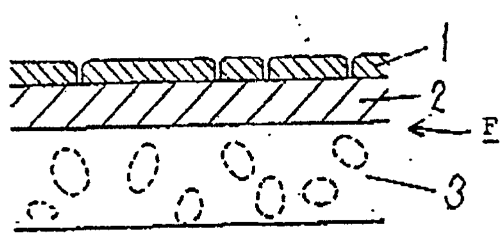


EP 0 337 499 A2

# METHOD FOR REGENERATING USED GAS-PERMEABLE FILMS

## BACKGROUND OF THE INVENTION

### Field of the Invention

This invention relates to gas-permeable composite films for selective separation which are useful in separating and concentrating an intended gas from mixed gases and can keep this characteristics over a long period of time. The invention also relates to a method for regenerating once used gas-permeable films.

### Description of the Prior Art

Enrichment or separation of an intended gas from mixed gases is often necessary in industrial fields or in actual life. For instance, there are known production of oxygen-enriched air used in combustion, medical applications and waste treatments, separation or recovery of helium from natural gases and the like, and separation of hydrogen from mixed gases obtained in thermal cracking of coal.

In recent years, a number of methods of separating and concentrating an intended gas from mixed gases using polymer films have been proposed. In fact, several techniques of separating useful gases such as hydrogen, nitrogen, oxygen and the like from exhausts from plants, natural gases and air have been already put into practice. However, the proposed methods all comprise direct contact of mixed gases with polymer films. Thus, such methods involve the serious problem that it is difficult to keep good gas permeability of the films over a long term because of the dirt contained the mixed gases.

In United States Patent No. 3,874,986, there are described selectively gas-permeable composite films of polyphenylene oxide/polydimethylsiloxane-polycarbonate copolymers having the polydimethylsiloxane-polycarbonate copolymer on the surface thereof. We made an experiment using the above composite film in which the film was formed on a microporous polypropylene film and was processed to give pieces of a modular dimension and placed at a portion near an exhaust port of a plant. Thereafter, an exhaust was passed under a pressure of -530 mmHg. As a result, it was found that the flow rate of the gas passed through the composite film, in some cases, lowered by 20 to 30% after about 1000 hours of the operation.

A similar experiment was also conducted by us using a polyhydroxystyrene-polysulfone-polydimethylsiloxane copolymers described in European Patent Application No. 82303791.6 of the same assignee. The results of the experiment revealed that the flow rate of the gas passed through the composite film lowered by 20 to 30% after about 1500 hours of the operation. Both the United States Patent and Patent Application are incorporated by reference.

As will be seen from the above, the known composite films which have good gas permeability at an initial stage deteriorate after a substantial time of the operation, as time passes, to such an extent as will not be used in practical applications.

Ultrathin films which are chiefly composed of polyphenylene oxide are hard and are liable to suffer fatigue by application of mechanical stress thereto when used as gas separator films. Such films are readily attacked by means of oxygen in an ambient atmosphere and are apt to deteriorate with a lowering of gas permeability in relation to time.

## SUMMARY OF THE INVENTION

It is accordingly an object of the present invention to provide ultrathin composite films for gas separation which overcome the drawbacks of the prior art films and which can maintain a high gas permeability characteristic over a long term.

It is another object of the invention to provide ultrathin composite films which have good gas separability and permeability.

It is a further object of the invention to provide ready and reliable regeneration of once used selective

gas-permeable films or composite films.

Broadly, there is provided, according to the invention, a selectively gas-permeable composite film which comprises a gas-selective ultrathin film consisting of at least one layer for separating and concentrating an intended gas from mixed gases and a covering layer formed on the film and having a thickness of from 50 to 200 angstrom. The covering layer is made of a polymer having a critical surface tension not larger than 30 dyne/cm and has a contact angle with water on its out surface should be 90° or higher.

The gas-selective film is formed on a microporous polymer support. Preferably, the film is made of two or three layers comprising a first ultrathin layer of a polymer having good gas permeability or separability and a second layer of a polymer having good gas separability and formed on the first layer. If the first layer is made of a polymer of good gas permeability, the first and second layers may be arranged in this or reverse order. Most preferably, the gas-selective film is made of a three-layered construction which comprises a first ultrathin layer of a polymer having good gas permeability, a second ultrathin layer of a polymer having good gas separability and a third ultrathin layer formed on the second layer and having good gas permeability. In this layer construction, the first layer should have a thickness from 0.2 to 1.0 $\mu$m and an oxygen permeation constant of 1 x $10^{-8}$ cc.cm/$cm^2$.second.cmHg or higher.

In a further embodiment, there is provided a method for regenerating a gas selective film whose gas permeability becomes poor, which method comprises contacting the film with an organic liquid medium which is unable to dissolve the film or is a poor solvent for the film.

## BRIEF DESCRIPTION OF THE DRAWINGS

Fig. 1 is a schematic view of a gas-permeable composite film according to one embodiment of the invention;

Figs. 2 and 3 are, respectively, graphs showing the relation between reduction rate in flow rate or amount of a permeated gas and operating time for composite films of the present invention and comparative films;

Fig. 4 is a schematic view of a gas-selective film comprising a plurality of layers according to another embodiment of the invention; and

Fig. 5 is a graph showing the relation between variation rate in flow rate of a permeated gas and operating time for the selective film used with regard to Fig. 4 and a comparative film.

## DETAILED DESCRIPTION AND PREFERRED EMBODIMENTS OF THE INVENTION

Gas separation methods using gas-permeable films usually comprise the step of directly contacting mixed gases with the film through which the gas is passed. The film naturally undergoes various actions from outside and are apt to deteriorate in nature as time passes. According to our experiments, one of main reasons why gas-permeable composite films deteriorate with time is considered due to deposition, on the film surface, of uneliminable fine particles (e.g. oil droplets or microsols having a diameter of from 0.1 to 1 $\mu$m) in mixed gases contacting with the film surface. In order to prevent contamination of solid surfaces, it is the usual practice to coat the solid surface with materials having small surface energy thereby imparting water or oil repellency to the solid surface. However, such materials are, in most cases, small in gas permeability and are very difficult to apply to gas-permeable composite films.

We made intensive studies on such coatings as mentioned above. As a result, it was found that when a gas-selective layer was covered or coated with a material having small surface energy in a controlled thickness of from 50 to 200 angstrom, the resulting gas-permeable composite film which was rarely contaminated with micro foreign matters without any significant variation in flow rate of a permeated gas. To this end, the covering layer should have a critical surface tension $\gamma_c$, of not higher than 30 dyne/cm and a contact angle, $\theta$, of water with the surface of the covering layer contacting with mixed gases should be 90° or higher. If the surface whose contact angle is smaller than 90°, it is liable to contaminate due to the hydrophilicity thereof.

When the covering layer is made of materials having a small surface tension but has a thickness below 50 angstrom, surface properties of the covering layer may be greatly influenced by surface properties of the lower gas selective film. Especially, when the selective film is made of a hydrophilic material, the contact angle of the oute outer surface may become too small.

On the contrary, when the thickness exceeds 200 angstrom, the rate of permeation through the composite film will be reduced because of the small gas permeability of the covering layer. When the thickness lies within a range of from 50 to 200 angstrom, the resulting covering layer is not arranged so dense but involves fine pinholes, so that little fine particles in the gas being passed are deposited thereon and the gas is allowed to smoothly pass through the composite film.

It is important to note that the covering layer should have good oil or water repellency without a sacrifice of other desirable properties such as flexibility, surface tension and the like. For these purposes, materials for the covering layer should be polymers having a critical surface tension, $\gamma_c$, of not higher than 30 dyne/cm, preferably below 25 dyne/cm and the covering layer should have a contact angle not lower than 90°. In order to ensure the above requirements, the covering layer may be cured with or without catalysts. This is true of polymethylhydrogensiloxane when used as the covering layer.

Examples of the materials for the covering layer suitable for the practice of the invention include: fluorine resins having surface chemical structure units of the the following formulas,

$-CF_3$ + $-CF_2$, $-CF_2-$, $-CF_2-CFH-$, $-CF_2-CFCl-$, $-CF_2-CH_2$, $-CFH-CH_2$, 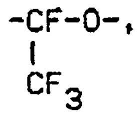, and 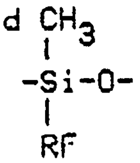

in which RF represents a member selected from $-CF_3$, $-CH_2-CF_3$ and $-CH_2-CH_2-CF_3$; polyolefins or diene polymers such as polybutene, polyisobutene, polypentene, polymethylpentene, polyhexene, polymethylhexene, polyheptene, polycyclohexylpentene, polystyrene, poly-alpha-methylstyrene, polybutadiene, polyisoprene, polycyclooctadiene and the like; and polyorganosiloxanes. It will be noted that, in most cases, the above-indicated polymers meet the requirements for the contact angle and critical surface tension, but the nature of the polymers may, more or less, vary depending on the production conditions and the like. In this sense, polymers used should be finally determined after confirmation of the characteristic requirements. More specifically, polymethylhydrogensiloxane, fluorinated alkylmethacrylate resins, poly-4-methylpentene-1, polymethyl fluorinated alkylsiloxanes and mixtures thereof are most preferably because these polymers or resins fully satisfy both requirements of $\gamma_c < 30$ dyne/cm and $\theta > 90°$. Moreover, these polymers have conveniently the ability of readily forming ultrathin flat films of a desired thickness. The films of these polymers may be superposed in one or more layers in practical applications. For the formation of the ultrathin film, a dilute solution of a polymer having a concentration of several percent is first prepared and allowed to spread over a confined water surface, followed by removing the solvent from the spread film thereby obtaining an ultrathin film having small surface energy. The ultrathin films of the above-indicated most preferable polymers have very good protecting effects.

If materials for the covering layer are liquid, they may be directly sprayed over a gas-selective film to form a covering layer on the film.

If polymethylhydrogensiloxane is used, a catalyst such as tetrabutyl tin is added to harden the resulting film. The polysiloxane may be cured or hardened at room temperature but the curing will be facilitated by application of heat.

The gas-selective ultrathin film may be a single layer or a plurality of unified layers. The materials for use as the layer or layers may, more or less, depend on the purpose and the type of gas being enriched or selected. Any known gas-selective materials may be used in the practice of the invention, including polydimethylsiloxane-polycarbonate copolymer, copolymers of polyhydroxystyrene-polysulfone-dpolydimethylsiloxane and the like. These polymers may be used in combination as separate layers, In addition, polyphenylene oxide, polyolefins and polyacetylenes which will be more particularly described with reference to a gas-selective film of a three-layered structure are also useful. Especially, Better results are obtained when the selective film adhered to the covering layer comprises a reaction product or copolymer of polyhydroxystyrene-polysulfone-polydimethylsiloxane when the film is made of a single layer. The manner of copolymerization or interaction of these polymers are described in European Patent Application No. 82303791.6 indicated before. The copolymer may be used singly or even in combination with other type of polymer. If this copolymer is used in combination, the copolymer should be contained in an amount of from 50 to 90 wt% of the composition. Polymers usable in combination with the copolymer include, for example, polystyrene, polymethyl methacrylate and the like.

In Fig. 1, there is shown a typical ultrathin composite film F which includes a covering layer 1, a gas-selective film 2 and a microporous polymer support 3 arranged in this order. This type of composite film is particularly described by way of examples below.

Example 1

Fluorinated alkyl methacrylate resin having a critical surface tension of 11 dyne/cm was used as a polymer for covering layer 1 as shown in Fig. 1 and a Diflon S3 (Sumitomo Chemicals. Ind. Co., Ltd.) solution comprising 2 to 4 wt% of the polymer was provided as a spreading solution for the layer 1. Polyhydroxystyrene-polysulfone-polydimethylsiloxane resin was provided as the gas-selective ultrathin film 2 and a 2 to 4 wt% benzene solution was used as a spreading solution of the film 2. These solutions were, respectively, dropped and spread over confined water surfaces on which the polymer films were formed. These films were adhered to the support 3 (Celegard 2400, by Celanese Plastics Company) in the order of the film 2 and the covering layer 1, thereby obtaining a gas-permeable composite film F shown in Fig. 1.

The above composite film was subsequently arranged to have a modular dimension of 30 cm x 30 cm and placed at a position near an exhaust port of a plant, followed by continuously operating a vacuum pump to a reduced pressure of 530 mmHg to determine a variation in amount of the gas passed through the composite film. The composite film of this example show little variation of the amount in relation to time as shown by curve A in Fig. 2. Even when the operation was continued over 10,000 hours, the amount lowered only by about 5%.

The above procedure was repeated for comparison except that the covering layer 1 was not formed. The variation of the amount of this prior art film is shown as curve B in Fig. 2, revealing that the amount lowered by about 30% after 1000 hours of the continuous operation.

As will be seen from the above, the composite film of the present invention in which the film 2 was covered with the covering layer 1 made of the polymer having a small surface tension was very effective in preventing deterioration thereof even when used over a long term.

It will be noted that the spreading over water surfaces is advantageous in forming a film of a large area at a time.

Example 2

The general procedure of Example 1 was repeated except that poly-4-methylpentene-1 having a critical surface tension of 25 dyne/cm was used as the polymer for the covering layer 1. The resulting composite film had such a small variation in amount of the exhaust gas permeated in relation to time as shown by curve C in Fig. 2. The amount lowered by as small as about 10% even after 10,000 hours.

Example 3

The general procedure of Example 1 was repeated except that polymethyl fluorinated alkylsiloxane, e.g. polymethylperfluoropropylsiloxane, having a critical surface tension of 21 dyne/cm was used, without dilution, as the covering layer 1 by spraying over the selective film adhered to the support 3 to form the covering layer 1.

The resulting composite film was small in variation of the amount as indicated by curve D in Fig. 2. The amount lowered only by 8% even after 10,000 hours of the continuous operation.

The polymer used in this example was liquid at normal temperatures and was suitable applied by spraying, ensuring the very simple ultrathin film-forming operation.

Example 4

The general procedure of Example 1 was repeated except that a two-layered structure of polyphenylene oxide/a copolymer or polydimethylsiloxane-polycarbonate units was used as the gas-selective layer. The resulting composite film showed results similar to the composition film of Example 1.

In the above examples, three polymers were used as the covering layer 1 and two polymers were used as the gas-selective film 2. When other polymers indicated before were used, a variation in amount of

permeation was in the range of from 5 to 10% after 10,000 hours of the continuous operation and thus the results were good. In the above examples, the gas-selective film is made of a single layer but two or more layers may be superposed.

Example 5

Polymethylhydrogensiloxane having a critical surface tension of 11 dyne/cm was mixed with 3 wt% of tetrabutyl tin as a catalyst for the polymer and a copolymer of polyhydroxystyrene-polysulfone-polycarbonate was used to form the gas-selective film 2. More particularly, a benzene solution comprising 2 to 4 wt% of the copolymer was prepared and spread over a confined water surface. After removal of the solvent, an ultrathin film was obtained, which was adhered to the support 3 (Celagard 2400, made by Celanese Plastics Co.). Over the thin film was sprayed the covering material to from a covering layer. After drying in air, the covering layer was cured at 70°C for 8 to 9 minutes to obtain a composite film as shown in Fig. 1. The composite film had a contact angle, with water, of 100 to 110°.

The composite film was processed to obtain a sample having a modular dimension of a size of 30 cm x 30 cm and placed at a position near an exhaust port of a plant, followed by continuously operating a vacuum pump to a reduced pressure of 535 mmHg to determine a variation in amount of the gas passed through the composite film in relation to time. The composite film of this example show a reduction in the amount of about 7% even after 5000 hours as shown by curve A in Fig. 3.

The above procedure was repeated for comparison except that the covering layer 1 was not formed. The variation in the amount of this prior art film is shown as curve B in Fig. 3, revealing that the amount lowered by as large as about 30% after 1000 hours.

For comparison, polydimethylsiloxane having a critical surface tension of 20.8 dyne/cm was used to form a covering layer. The polydimethylsiloxane was dissolved in benzene to obtain a 2 to 4 wt% benzene solution and applied onto a gas-selective film-bearing support and air-dried to obtain a composite film of the type shown in Fig. 1 having a contact angle of 79 to 83°. This composite film was subjected to the life test in the same manner as described above. The results are shown in Fig. 3 by curve C, revealing that the life was prolonged to about 3 times the life of the covering layer-free composite film but the amount of the permeation after 3000 hours was reduced by 30%. Thus, the effect of stabilizing the permeation characteristic was very small as compared with the effect shown by the composite film of the present invention.

As will be seen from the above, when the selective film 2 is covered with the covering layer 1 having a large critical surface tension, it can stand use in continuous operations over a long term and is thus very effective in keeping the gas separability characteristic.

In this example, the catalyst was applied to the polymethylhydrogensiloxane. If the amount of the catalyst increases, the curing time can be shortened or the baking temperature can be lowered, so that the polysiloxane can be preferably used as a covering material for gas-selective films or supports which have poor resistance to heat.

Example 6

The general procedure of Example 5 was repeated except that fluorinated alkyl methacrylate resin was used as a material for the covering layer 1 and a trifluorotrichloroethane solution comprising 2 to 4 wt% of the resin was prepared and spread over a confined water surface. The resulting film was set on the gas-selective film to obtain a composite film. The covering layer surface had a contact angle of 99 to 106°. The variation in amount of the permeated gas was small as shown by curve D in Fig. 3. After 6000 hours, the reduction rate was about 6%.

Example 7

The general procedure was repeated except that a two-layered gas-selective film of polyphenylene oxide/polydimethylsioxane-polycarbonate copolymer was used to form the selective film thereby obtaining a composite film. The composite film had the outer surface whose critical contact angle was in the range of 100 to 110°. The gas permeation rate of a covering layer-free composite film lowered by about 40% at 1000 hours as shown by curve E in Fig. 3, but the composite film of this example showed the rate reduced only by 7% at 5000 hours after the continuous operation.

Example 8

The general procedure of Example 5 was repeated except that polymethyl fluorinated alkylsiloxane having a critical surface tension of 21 dyne/cm was used to form the covering layer 1, i.e. a solution of the polymer was spread over a confined water surface in a container of a large area and the gas-selective film-bearing support was brought into contact with the polymer film to obtain a composite film. The composite film had the outer surface whose contact angle was in the range of from 96 to 98°. The permeation rate in relation to time was small as shown by curve F in Fig. 3 and was reduced by about 8% even after 8000 hours.

Example 9

The general procedure of Example 6 was repeated using poly-1-methylpentene-1 as the material for the covering layer 1, thereby obtaining a composite film whose contact angle on the outer surface was in the range of from 110 to 113°. The permeation rate of the composite film lowered by only about 5% even after 6000 hours of the continuous operation as particularly shown by curve G in Fig. 3.

In Examples 5 through 9, four polymers were used as the covering layer 1 and two polymers were used as the selective film 2. Similar to the polymers described with regard to the foregoing examples, the variation in amount of gas permeation after 6000 hours was about from 5 to 10%. Thus, good results were obtained.

The gas-selective films which consist of a single layer and double layers was described hereinabove. With regard to the double layers, two types of polymers suitable for gas separation were used in Examples as superposed, but one layer may be rather gas-permeable in nature as described below with regard to a three-layered structure. As a matter of course, such one layer may have both gas permeability and separability at the same time. As mentioned above, the selective film may consist of three or more layers and the following three-layered structure is most preferred in the practice of the invention. The three-layered structure comprises a first thin layer made of a polymer having good gas permeability, a second thin layer formed on the first layer and made of a polymer having good gas separability, and a third thin layer formed on the second thin layer and made of a polymer having good gas permeability.

The polymers having good gas permeability which are suitable used as the first ultrathin layer include, for example, polyorganosiloxanes, reaction products of a three dimensional structure such as copolymers of polyorganosiloxanes and polyhydroxystyrene, copolymers of novolac resin and polydimethylsiloxane, copolymers of polyhydroystyrene-polysulfone-polydimethylsiloxane, and copolymers of polyhydroxystyrene-polyurethane-polydimethylsiloxane and mixtures thereof. The copolymers or reaction products should have a permeability to oxygen of $1 \times 10^{-8}$ cc.cm/cm$^2$.second.cmHg or higher. The thickness of the first layer is preferred to be in the range of from 0.2 to 1.0 µm. This is because smaller thicknesses results in poor durability and larger thicknesses bring about reduction of an initial amount of gas permeation.

The third thin layer may be made of the same polymer as used to form the first thin layer and the polymers indicated with reference to the first thin layer are all used for the third layer. Preferably, copolymers of polyhydroxystyrene-polysulfone-polydimethylsiloxane are preferred because it has good gas permeability and separability. The polysulfone useful in the copolymers useful in the practice of the invention may be reaction products of bisphenol A type compounds in which methyl groups joined to the carbon of bisphenol A may be each replaced by an alkyl group having from 2 to 5 carbon atoms and 1,4-dichlorodiphenylsulfone.

The second ultrathin layer should be made of polymers having good gas separability. Examples of such polymers include: polyphenylene oxides having recurring units of the formula

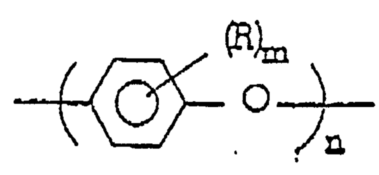

in which R represents a linear or branched alkyl group having from 1 to 5 carbon atoms and m is an integer of 1, 2 or 3, n is an integer sufficient to give a degree of polymerization of 100 to 2000; polyolefins having recurring units of the formula $-(CH_2-\underset{R'}{CH})_a-$

in which R′ represents a linear or branched alkyl or halogenated alkyl group having from 2 to 8 carbon atoms and a represents an integer sufficient to give a degree of polymerization of 150 to 1500; and polyacetylenes having recurring units of the formula

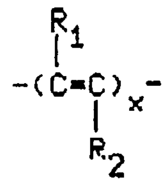

in which $R_1$ represents a hydrogen atom or a halogen atom, $R_2$ represents a linear or branched alkyl group having from 2 to 8 carbon atoms or a phenyl group and x represents an integer sufficient to give a degree of polymerization of 150 to 15,000.

The gas-selective film of the one, two or three-layered structure is supported on a microporous film or sheet made of various polymers ordinarily used for these purposes. Typical examples of such polymers include polyolefins such as polyethylene, polypropylene and the like, polycondensates such as polusulfones, polycarbonates and the like.

Fig. 4 particularly shows another a composite ~~film~~ of the three-layered structure described above. In the figure, there is shown a composite film F′ which includes a microporous polymer support 11 such as Celagard 2400 made by Celanese Plastics Company. Indicated by 12 is a first ultrathin layer made of polymers having good gas permeability and by 13 is a second ultrathin film having good gas separability. Indicated by 14 is a third ultrathin layer made of polymers with good gas permeability.

We made tests using three-layered selective films. More particularly, composite films of the three-layered structure were made using Celagard 2400 as the support 11, a reaction product of poyhydroxystyrene-polysulfone-polydimethylsiloxane as the first and third layers 11 and 14, and polyphenylene oxide and poly-4-methylpentene-1 as the second layer 13. Polymethylhydrogensiloxane was used as a covering layer for each sample. Total eight samples were subjected to tests of determining a oxygen permeation rate and a durability. The results are summarized in Table below.

Table

| Sample No. | Material for First and Third Layer | Materials for Second Layer | Thickness of Thin Layers | | | Oxygen Permeation Rate *1 | $F_{O_2}/F_{N_2}$ | Durability Variation Rate in Amount of Gas Permeated after 1000 hrs (%) *2 |
|---|---|---|---|---|---|---|---|---|
| | | | First Layer | Second Layer | Third Layer | $F_{O_2}$ (cc/cm$^3$.sec.atm) | | |
| 1 | Copolymer of polyhydroxystyrene/polysulfone/polydimethylsiloxane | Polyphenylene oxide | 0.05 | 0.10 | 0.05 | $3.30 \times 10^{-2}$ | 3.50 | 45 |
| 2 | | | 0.10 | 0.10 | 0.05 | $3.15 \times 10^{-2}$ | 3.65 | 52 |
| 3 | | | 0.20 | 0.10 | 0.05 | $3.10 \times 10^{-2}$ | 3.72 | 90 |
| 4 | | | 0.30 | 0.10 | 0.05 | $3.05 \times 10^{-2}$ | 3.75 | 92 |
| 5 | | Poly-4-methyl-methylpentene-1 | 0.05 | 0.10 | 0.05 | $4.21 \times 10^{-2}$ | 2.81 | 69 |
| 6 | | | 0.10 | 0.10 | 0.05 | $4.52 \times 10^{-2}$ | 2.90 | 73 |
| 7 | | | 0.20 | 0.10 | 0.05 | $4.35 \times 10^{-2}$ | 3.05 | 94 |
| 8 | | | 0.30 | 0.10 | 0.05 | $4.10 \times 10^{-2}$ | 3.10 | 95 |

*1 The thicknesses of the individual layers are each calculated from an area of a film on a water surface.

*2 The initial amount of permeated gas was taken as 100 and an amount of the gas after 1000 hours was indicated as an index to the initial amount.

According to the above table, when the thickness of the first layer is changed from 0.05 to 0.3 µm, the oxygen permeation rate is kept almost constant. Although not shown in this table, the first layer having a thickness exceeding 1.0 µm had an initial oxygen permeation rate of about 1/3 time the initial rate of the above first layers. On the other hand, the durability of the composite films is greatly influenced by the thickness of the first layer, i.e. when the thickness is changed from 0.05 to 0.10 µm, the amount of gas permeation after 1000 hours varies up to 50% of the initial amount. However, when the thickness exceeds 0.2 µm, the durability drastically increases and the amount after 1000 hours varies only to an extent of 90% of the initial amount.

Polyphenylene oxide and poly-4-methylpentene-1 were tested as the second layer used for gas separation, with similar tendencies being obtained. The above results thus reveal that the thickness of the first layer is in the range of from 0.2 to 1.0 µm, within which the composite film has good gas separability and a large permeation rate of gas with a much improved durability.

Fig. 5 shows the results of the durability test using the sample Nos. 1 and 3, revealing that when the thickness of the first layer is 0.5 µm, the durability is poor and the amount of gas permeation after 1000 hours lowers to 45% of the initial amount. On the other hand, the composite film of No.3 according to the invention has good durability and an amount of gas permeation after 1000 hours of 90% based on the initial amount.

As will be seen from the above results of the Table, the composite film of the invention can keep a stable gas permeation characteristic over a long term even when used under severe operating conditions. While prior art gas permeation films are so short in life that when they are continuously applied for 1000 to 1500 hours, the amount of gas permeation is reduced to an extent of 20 to 60%, the composite films of the three-layered structure involve little variation in an amount of gas permeation after 5000 to 8000 hours. Thus, the composite films of the invention have practically satisfactory characteristics but if the composite film has been used over a very long time or a higher amount of gas permeation is needed after use for a time, such film may be regenerated as follows.

The gas-separable or selective composite film of the invention which has lowered in amount of gas permeation as time passes may be regenerated by contacting the film with an organic liquid medium incapable of dissolving polymers constituting the composite film or serving as a poor solvent for such polymers.

When the film is made of copolymers of polyhydroxystyrene-polysulfone-polydimethylsiloxane, poly-4-methylpentene-1 and polyphenylene oxide, the regeneration method is very effective.

The organic mediums may be alcohols, hydrocarbons and the like. Examples of alcohols include methanol, ethanol, isopropyl alcohol and the like. Examples of hydrocarbons include hexane, cyclohexane and the like. Also, petroleum ether, methyl cellosolve and ethyl cellosolve may be used. Of these, methanol and ethanol are preferred. These organic m solvents may further comprise up to 20 wt% of water.

The contact of the organic medium with the gas separator film may be carried out by a method of immersing the film in the medium, a method of directly spraying the medium over the film.

The regeneration method is particularly described by way of examples. In examples, samples being washed were gas separator films which had lowered in separation performance by continuous operation within a module over 1500 hours in air and cut into pieces having a size of about 5 cm x 5 cm. The test was effected by methods including a method in which a sample was held with clips at opposite sides thereof and immersed in various solvents in a Petri dish for about 1 hour and a method in which a sample was sprayed with various organic mediums using a sprayer at a distance of about 30 cm from the sample and allowed to stand for about 1 hours.

Example 10

An ultrathin film of a copolymer of polyhydroxystyrene-polysulfone-polydimethylsiloxane which had lowered in amount of gas permeation was provided as a sample. The sample was held with clips at opposite sides thereof and immersed in methanol in a Petri dish for about 1 hour. Thereafter, the sample was removed from the dish and dried in a dryer of 40° C, followed by removing the sample from the dryer and allowing to stand until it was cooled down to room temperature. Finally, the time of permeation of oxygen and nitrogen through the film was measured using a flowmeter, from which a separation coefficient, α, was calculated. With a non-treated sample, the time of permeation to 10 cc of oxygen was 21.36 seconds and thus the separation coefficient was 1.97. The sample treated with methanol had a time of permeation to 100 cc of oxygen was 13.90 seconds and the separation coefficient was 2.05. Thus, the oxygen permeation rate remarkable decreases with an improved separation coefficient.

Example 11

The sample of the same type as used in Example 10 was immersed in ethanol in a Petri dish for about 1 hour, followed by repeating the same procedure as in Example 10. While the non-treated sample had a time by second of permeation to 10 cc of oxygen was 22.76 second with a separation coefficient of 1.96, the sample treated according to the present invention had a time of permeating to 10 cc of oxygen of 14.59 seconds and a separation coefficient of 1.98. Thus, the oxygen permeation rate and separation coefficient were improved.

Comparative Example 1

A sample of the same type as used in Example 1 was immersed in acetone for about 1 hour, followed by repeating the same procedure as in Example 10. The non-treated sample had a time of permeation to 10 cc of oxygen of 22.82 second and a separation coefficient of 2.03. The sample treated with acetone suffered complete pinholes and deteriorated. Similar results were obtained when there were used solvents such as chloroform, methyl ethyl ketone, pyridine, dimethylformaldehyde, ethyl acetate and dimethyl acetamide, i.e. the film was dissolved to make pinholes in the film and thus deteriorated.

Comparative Example 2

A sample of the same type as used in Example 10 was immersed in city water in a Petri dish for about 1 hour, followed by repeating the procedure of Example 10. The non-treated sample had a time of permeation to 10 cc of oxygen of 23.58 seconds and a separation coefficient of 2.07. The immersed sample had a time of 23.44 seconds and a separation coefficient of 2.05. Thus, little effect was recognized.

Example 12

A poly-4-methylpentene-1 film whose permeation rate lowered to a substantial extent was used as a sample. The sample was immersed in methanol in the same manner as in Example 10. A non-treated sample had a time of permeation to 1 cc of oxygen of 8.13 second and a separation coefficient of 3.41, whereas the methanol-treated sample had a time of 6.67 seconds and a separation coefficient of 3.44. From the results, ethanol had the effect of regenerating the film.

Example 13

A film made chiefly of polyphenylene oxide whose permeation rate lowered to a substantial extent was provided as a sample. The sample was immersed in methanol in the same manner as in Example 10. While a non-treated sample had a time of permeation to 1 cc of oxygen of 8.20 seconds and a separation coefficient of 3.95, the sample immersed in methanol had a time of 5.40 second and a separation coefficient of 3.96. Thus, regeneration of the film could be recognized.

In Examples 10 through 13, methanol and ethanol were used but other alcohols hydrous alcohols and hydrocarbons were found to show the effect of regenerating films whose permeation rate lowered.

The following example shows a spraying technique from which similar results as in the immersion method were obtained.

Example 14

A sample of the same type as used in Example 10 was sprayed with methanol as a distance of 30 cm from the sample. About 1 hour after the spraying, the sample was completely dried and subjected to measurement of times by second of permeation to oxygen and nitrogen using a flowmeter along with a separation coefficient. A non-treated sample had a time of permeation to 10 cc of oxygen of 21.24 seconds and a separation coefficient of 1.96. The sprayed sample had a time of permeation to 10 cc of oxygen of 15.61 seconds and a separation coefficient of 1.99. Thus, regeneration of the film was possible similar to

the immersion method.

A gas-permeable composite film comprising a gas-selective film consisting of at least one layer for separating and concentrating an intended gas from mixed gases, and a covering layer formed on the selective film. The covering layer has a critical surface tension not larger than 30 dyne/cm and a contact angle of water of not smaller than 90°. A method of regenerating the film used over a long term is also described in which the used film is contacted with an organic liquid medium inert to the material for the film.

## Claims

1. A method for regenerating a gas separator film which comprises contacting a gas separator film consisting of at least one layer and having a decreased permeation rate as time passes with an organic liquid medium incapable of dissolving a polymer constituting the separator film or serving as a poor solvent for the polymer.

2. The method according to Claim 1, wherein said gas separator film is immersed in the liquid medium.

3. The method according to Claim 1, wherein said liquid medium is sprayed over said gas separator film.

4. The method according to Claim 1, wherein the liquid medium is an aliphatic alcohol.

5. The method according to Claim 4, wherein the aliphatic alcohol is methanol or ethanol.

6. The method according to Claim 1, wherein said polymer constituting the gas separator film is a copolymer of polyhydroxystyrene-polysulfone-polydimethylsiloxane.

7. The method according to Claim 1, wherein said polymer is poly-4-methylpentene-1.

8. The method according to Claim 1, wherein said polymer is polyphenylene oxide.

Fig. 1

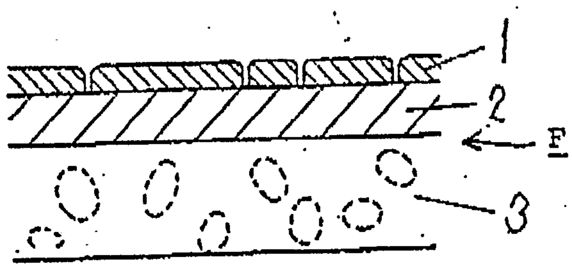
1
2
F
3

Fig. 2

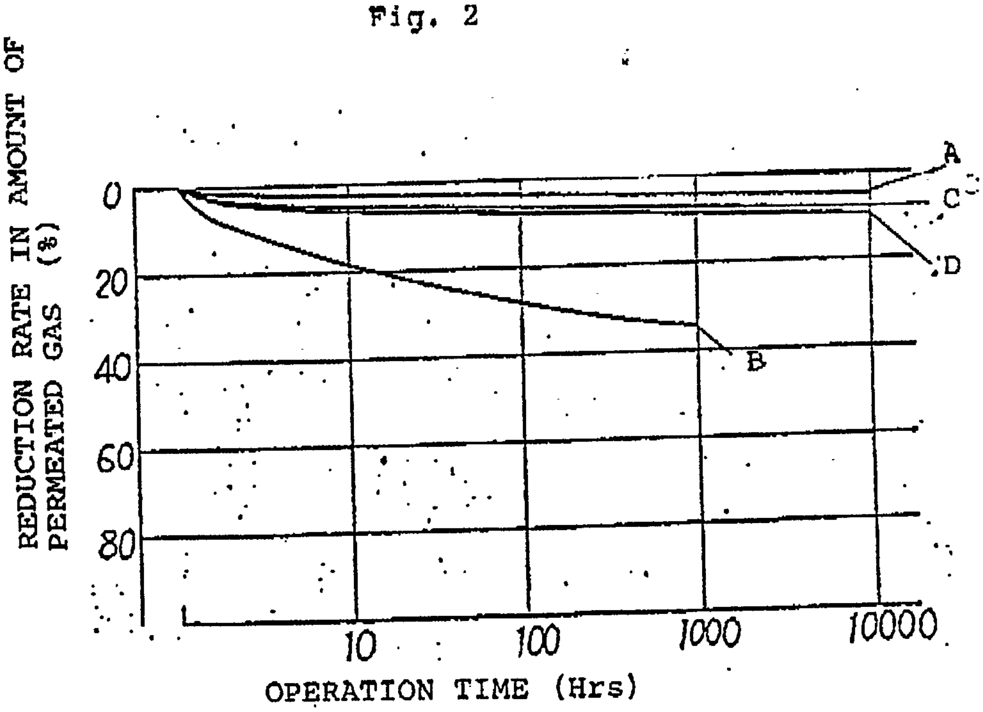
REDUCTION RATE IN AMOUNT OF PERMEATED GAS (%)
0
20
40
60
80
A
C
D
B
10
100
1000
10000
OPERATION TIME (Hrs)

Fig. 3

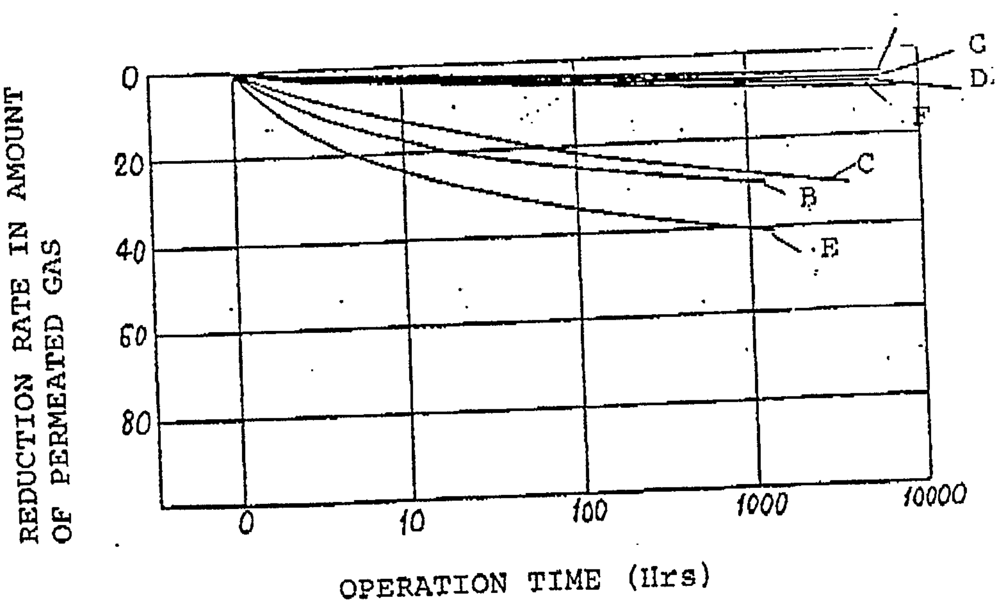
A
C
D
F
C
B
E
0
20
40
60
80
REDUCTION RATE IN AMOUNT OF PERMEATED GAS
0
10
100
1000
10000
OPERATION TIME (Hrs)

Fig. 4

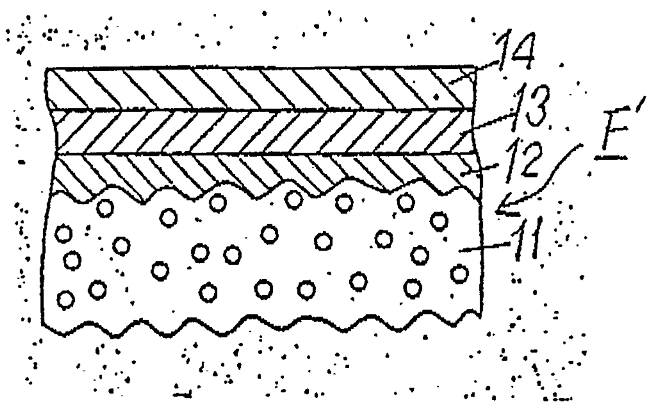
14
13
12
11
E'

Fig. 5

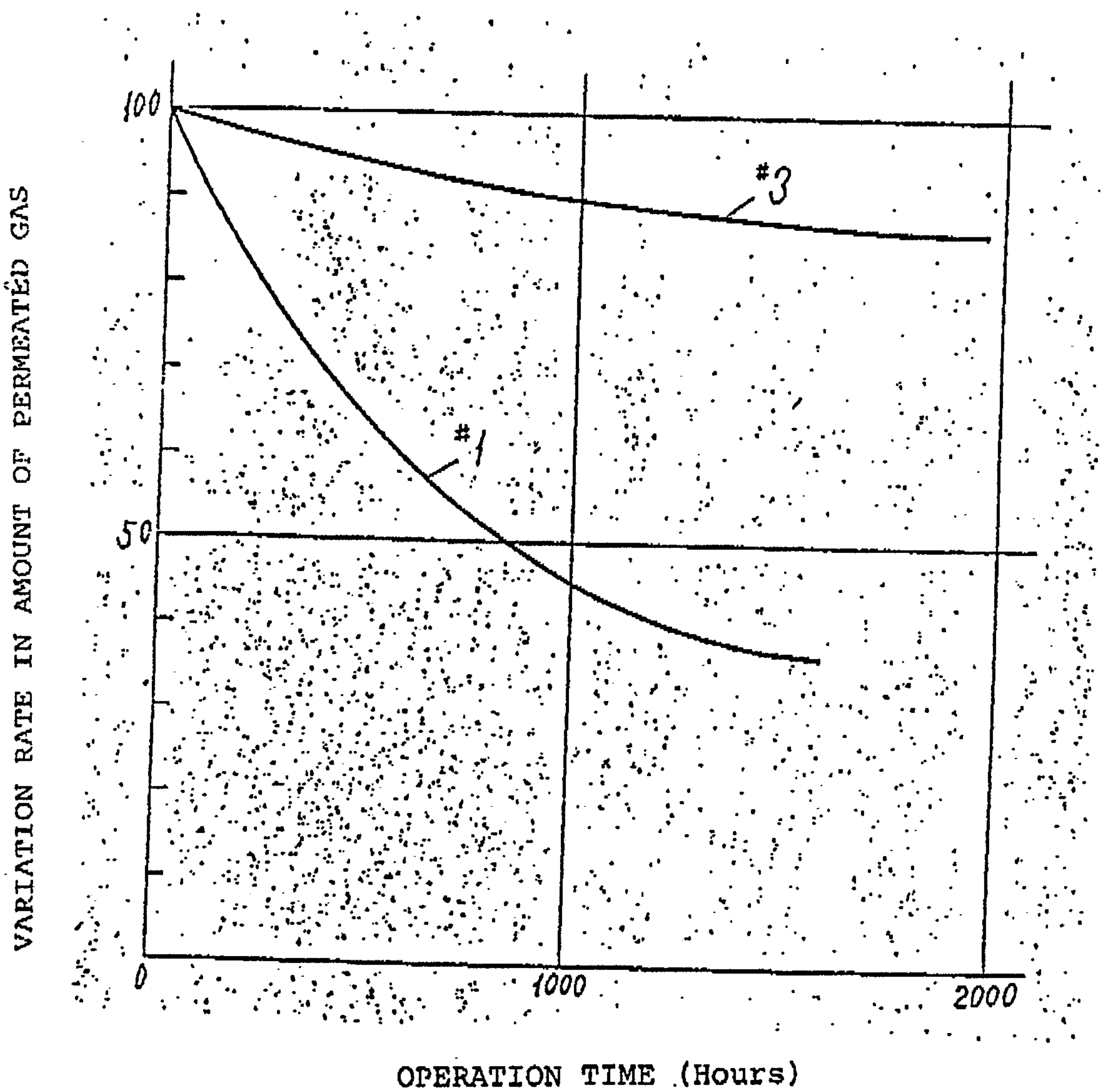
100
50
0
#3
#1
1000
2000
VARIATION RATE IN AMOUNT OF PERMEATED GAS
OPERATION TIME (Hours)